# EUROPEAN PATENT SPECIFICATION

(11) **EP 4 220 762 B1**
(45) Date of publication and mention of the grant of the patent: **29.07.2026**
(21) Application number: 21870709.9
(22) Date of filing: 02.03.2021
(51) Int. Cl.: H01M 4/36, H01M 4/48, H01M 4/131, H01M 4/134, H01M 4/1391, H01M 4/38, H01M 4/485, H01M 4/525, H01M 4/58, H01M 4/62, H01M 4/02, H01M 10/052, H01M 10/0525

(54) **NEGATIVE ELECTRODE MATERIAL ON WHICH METAL ELEMENT IS GRADIENT-DOPED AND APPLICATION THEREOF**
NEGATIVES ELEKTRODENMATERIAL MIT GRADIENTENDOTIERTEM METALLELEMENT UND ANWENDUNG DAVON
MATÉRIAU D'ÉLECTRODE NÉGATIVE SUR LEQUEL UN ÉLÉMENT MÉTALLIQUE EST DOPÉ PAR GRADIENT ET SON APPLICATION

(30) Priority: 27.09.2020 CN 202011031911
(43) Date of publication of application: 02.08.2023
(73) Proprietor: Tianmulake Excellent Anode Materials Co., Ltd., Liyang, Jiangsu 213330 (CN)
(72) Inventor: YIN, Yingying, Liyang, Jiangsu 213330 (CN); LIU, Bonan, Liyang, Jiangsu 213330 (CN); LUO, Fei, Liyang, Jiangsu 213330 (CN); LI, Hong, Liyang, Jiangsu 213330 (CN)
(74) Representative: Glück Kritzenberger Patentanwälte PartGmbB
(86) International application number: PCT/CN2021/078604
(87) International publication number: WO 2022/062320

(56) References cited:
- EP-A1- 3 879 605
- WO-A1-2020/040586
- WO-A1-2020/103914
- CN-A- 108 461 723
- CN-A- 108 461 723
- CN-A- 109 755 500
- CN-A- 110 556 529
- CN-A- 111 164 803
- CN-A- 111 180 692
- CN-A- 111 342 031
- CN-A- 111 342 031
- CN-A- 112 271 277
- US-A1- 2021 167 362
- US-A1- 2024 105 924

## Description

### CROSS REFERENCE TO RELATED APPLICATIONS

This application claims priority for Chinese patent application No. 202011031911.2, entitled "Negative Electrode Material On Which Metal Element is Gradient- Doped and Application thereof", filed with China National Intellectual Property Administration on September 27, 2020.

### BACKGROUND OF THE INVENTION

### 1. Technical Field

The present invention relates to the technical field of secondary battery materials, in particular to a negative electrode material on which a metal element is gradient-dopd and application thereof.

### 2. Description of Related Art

With the application of lithium ion batteries in the power field, the demand of people for the performance of secondary batteries is increasing day by day. In order to improve energy density, developing positive and negative electrode active materials with higher capacity has become the main research direction. At present, the high-energy density negative electrode material mainly developed commercially is Silicon-based negative electrode. In theory, the silicon negative electrode shows an ultra-high capacity of 4200 mAh/g, but the process of lithium deintercalation is accompanied by about 300% volume expansion, which brings big problems for its practical application. SiOx has smaller capacity than silicon, but it has obvious advantages in relieving volume expansion and prolonging the cycle life of batteries. However, during first-cycle lithium intercalation of SiOx, lithium reacts with silicon dioxide to form an irreversible lithium oxide, which leads to the loss of lithium, and first-cycle charge and discharge efficiency drops below 75%. In addition, although smaller than that of silicon, the volume expansion of SiOx is also obvious.

In order to improve the first efficiency of SiOx and slow down the volume expansion, pre-lithiation or doping other elements is commonly conducted. However, the specific implementation of pre-lithiation and doping and the selection of materials correspond to different improvement effects. Up to now, poor cycling performance is still the main reason that restricts the industrialization of SiOx. At present, the main problem to be solved is to improve the first efficiency of SiOx and alleviate the volume expansion before and after lithium intercalation and deintercalation.

CN 111 164 803 A discloses a negative electrode material. The document WO 2020 103914 discloses a negative electrode material according to the preamble of claim 1.

### BRIEF SUMMARY OF THE INVENTION

The embodiments of the present invention provide a negative electrode material on which a metal element is gradient-doped and application thereof. The negative electrode material contains a metal element M doped in a concentration-gradient manner, which can improve the cycling performance of SiOx. The gradient doping featured by gradually increasing concentration from inside to outside provides a space for the expansion of SiOx particles, so as to realize slow pressure release, thus slowing down the accumulation of stress, and helping to alleviate the negative impact of volume expansion and improve the cycling performance of materials.

The present invention provides a negative electrode material on which a metal element is gradient-doped, wherein the negative electrode material comprises a granular silicon oxide/M composite material on which a metal element M is gradient-doped;
the general formula of the silicon oxide is SiOx, wherein 0<x<2;
the metal element M comprises one or more of Na, Mg, Al, Li, Mn, Fe, Co, Ni, Cu or Zn; in the negative electrode material, the content of the metal element M gradually decreases from a surface to a core, showing a continuous doping distribution of concentration gradient; and
the general chemical formula of the silicon oxide /M composite material is SiM_{y}O_{z}, wherein 0<y<10, 0<z<10.

The average doping mass of the metal element M in the negative electrode material accounts for 5-40% of the total mass of the negative electrode material;
wherein the content of the metal element M decreases continuously from 30-50% on the surface to 0-20% at the core in a gradient manner.

A doping region of the metal element M is a region that occupies [0-20%] to 100% of the particle radius of the negative electrode material from inside to outside and the doping depth is controlled by diffusion of the metal element during high-temperature solid-state treatment depending on diffusion temperature, diffusion time, particle size, and concentration gradient of the doping source.

Preferably, an average particle diameter (D₅₀) of the negative electrode material is 0.1-40 µm, and a particle specific surface area of the negative electrode material is 1-40 m²/g.

Preferably, the negative electrode material further comprises a carbonaceous coating layer coated on outer surfaces of the silicon oxide/ M composite particles.

In a second aspect, an embodiment of the present invention provides a negative electrode plate comprising the negative electrode material described above.

In a third aspect, an embodiment of the present invention provides a lithium battery comprising the negative electrode material described above.

The negative electrode material on which a metal element is gradient-doped provided by the embodiments of the present invention is a composite material particle containing a main part SiOx and a doped metal element M, the content of M gradually decreases from the surface to the core of the particle, and a continuous doping distribution of concentration-gradient is shown. This concentration-gradient doping method can improve the cycling performance of SiOx. Volume expansion of the SiOx particles occurs during lithium intercalation, and an outer layer of the particle bears not only the stress caused by its own volume expansion, but also the pressure caused by volume expansion inside the particle, so the outer layer of the particle has more severe volume deformation than an inner layer. A compound formed by the doped metal element M and SiOx can relieve the volume expansion. The gradient doping method featured by gradually increasing concentration of M from inside to outside provides a space for the expansion of SiOx particles, so as to realize slow pressure release, thus slowing down the accumulation of stress, and helping to alleviate the negative impact of volume expansion and improve the cycling performance of materials.

### BRIEF DESCRIPTION OF THE SEVERAL VIEWS OF THE DRAWINGS

The technical solution of the embodiments of the present invention will be described in further detail with reference to the drawings and embodiments.
Fig. 1 is a test chart of the distribution curve of Zn content along the cross-sectional diameter of a negative electrode material on which a metal element is gradient-doped provided by an embodiment of the present invention; and
Fig. 2 is a scanning electron microscope (SEM) diagram of a negative electrode material on which a metal element is gradient-doped provided by an embodiment of the present invention.

### DETAILED DESCRIPTION OF THE PRESENT INVENTION

The present invention will be further explained below with reference to drawings and specific embodiments, but it should be understood that these embodiments are only for more detailed explanation, and should not be construed as limiting the present invention in any way, that is, not intended to limit the scope of protection of the present invention.

A negative electrode material on which a metal element is gradient-doped according to the present invention comprises a granular silicon oxide/M composite material on which a metal element M is gradient-doped;

Wherein, the general formula of the silicon oxide is SiOx, where 0<x<2; the metal element M comprises one or more of Na, Mg, Al, Li, Mn, Fe, Co, Ni, Cu or Zn; in the negative electrode material, the content of the metal element M gradually decreases from a surface to a core, showing a continuous doping distribution of concentration gradient; and

The general chemical formula of the silicon oxide /M composite material is SiM_{y}O_{z}, where 0<y<10, 0<z<10.

The average particle diameter (D₅₀) of the negative electrode material is 0.1-40 µm, and the particle specific surface area of the negative electrode material is 1-40 m²/g.

The negative electrode material may further comprise a carbonaceous coating layer coated on outer surfaces of silicon oxide /M composite particles.

Further, the average doping mass of the metal element M in the negative electrode material accounts for 5%-40% of the total mass of the negative electrode material, and the content of the metal element M decreases continuously from 30-50% on the surface to 0-20% at the core in a gradient manner. In the present invention, a doping region of the metal element M is a region that occupies [0-20%] to 100% of the particle radius of the negative electrode material from inside to outside, for example, the negative electrode material may be completely doped, or 2%, 5%, 10%, 15% or 20% of the core of the negative electrode material may be undoped. The above shows that the doping amount of the metal element M in the core may or may not be zero, and there may be a region without the metal element M in the core.

In different embodiments, an energy dispersion spectrum (EDS) is scanned along the diameter direction of the cross section of the particle, and an M content curve obtained from the EDS shows that from one end surface to the core and then the other end surface, the content of M gradually decreases and then gradually increases. In some examples, there is a plateau area with zero M between decreasing and increasing sections of the curve, while in others, there is no plateau area.

The negative electrode material proposed in this embodiment can be used in negative electrode sheets and lithium ion batteries, such as liquid lithium ion batteries, semi-solid lithium ion batteries, all-solid ion batteries or lithium-sulfur batteries, and can also be combined with other materials to serve as a negative electrode material in practice.

The negative electrode material on which a metal element is gradient-doped provided by the embodiments of the present invention is a composite material particle containing a main part SiOx and a doped metal element M, the content of M gradually decreases from the surface to the core of the particle, and a continuous doping distribution of concentration-gradient is shown. This concentration-gradient doping method can improve the cycling performance of SiOx. Volume expansion of the SiOx particles occurs during lithium intercalation, and an outer layer of the particle bears not only the stress caused by its own volume expansion, but also the pressure caused by volume expansion inside the particle, so the outer layer of the particle has more severe volume deformation than an inner layer. A compound formed by the doped metal element M and SiOx can relieve the volume expansion. The gradient doping method featured by gradually increasing concentration of M from inside to outside provides a space for the expansion of SiOx particles, so as to realize slow pressure release, thus slowing down the accumulation of stress, and helping to alleviate the negative impact of volume expansion and improve the cycling performance of materials. Compared with a conventional uniformly doped material, the gradiently doped material structure of the present invention has a better volume expansion relieving effect and better cycling performance.

For the sake of a better understanding of the technical scheme provided by the present invention, several specific examples are given below to illustrate negative electrode materials with gradient doping of different metal elements, application methods thereof in lithium ion batteries and battery characteristics.

### Embodiment 1

The embodiment provides a negative electrode material on which Zn is gradient doped.

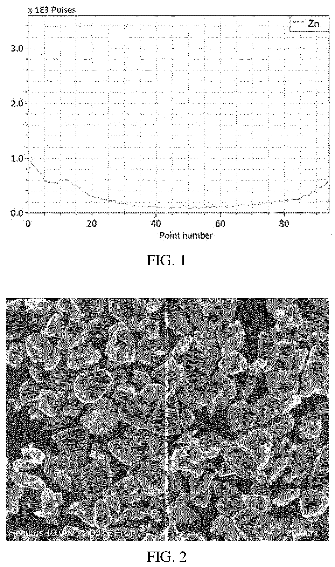

The preparation process and testing process are as follows.
(1) A zinc acetate solution of 1 mol/L, a sodium hydroxide solution of 2 mol/L and ammonia water of 2 mol/L were prepared first;
(2) SiOx particles and deionized water were fully stirred and evenly mixed according to the ratio of 1:10 to prepare SiOx slurry, then the zinc acetate solution was added while stirring, where the mass ratio of the introduced zinc element to the SiOx was 1:3, after even mixing, the sodium hydroxide solution and the ammonia water were added into a reaction container together, the pH was adjusted to 11, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1200°C for 3 hours in a nitrogen atmosphere, and naturally cooled, crushed and screened to obtain a SiOx composite material with gradient-doped Zn;
(5) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Zn doped in a concentration-gradient manner;
(6) a prepared SiOx particle doped with Zn doped in a concentration-gradient manner was cut by a focused ion beam, and energy spectrum analysis was performed under a scanning electron microscope, where the distribution curve of Zn along the diameter of section of the particle is shown in Fig. 1;

Because the doping reaction adopted by the present invention was a solid-solid reaction, in the slurry state, a doping source first adhered to a surface of the SiOx particle, and then underwent high-temperature treatment; the doping element gradually diffused into the SiOx particle under the driving of its own concentration difference; the doping and diffusion processes were closely related to the concentration gradient of the doping source, diffusion time, diffusion temperature, the SiOx particle size, adhesion strength of the doping source, the particle size of the doping source and other factors, which were the main factors affecting the final doping concentration distribution; and by controlling these variables, different distributions of Zn can be realized;
(7) the scanning electron microscope (SEM) diagram of the prepared SiOx particle with Zn doped in a concentration-gradient manner is shown in Fig. 2, which is a micron-sized irregular potato shape; and
(8) the prepared SiOx composite material, carbon black (SP) and sodium carboxymethyl cellulose (CMC) were mixed according to the ratio of 7: 2:1 to prepare negative electrode slurry, a negative electrode sheet was prepared after coating and drying, metal Li was used as a counter electrode, a button cell was assembled in a glove box, and a charge-discharge test was conducted; and battery test results are listed in Table 1.

### Embodiment 2

The embodiment provides a negative electrode material with gradient doped Zn.

The preparation process and testing process are as follows.
(1) An acetone solution of zinc xanthate of 1 mol/L was prepared first;
(2) SiOx particles and acetone were fully stirred and evenly mixed according to the ratio of 1:10 to prepare SiOx slurry, then the acetone solution of zinc xanthate was added while stirring, where the mass ratio of the introduced zinc element to the SiOx was 1:4, continuous stirring was conducted for 10 hours, and then the mixture was placed in an oven at 80°C to be baked for 12 hours;
(3) a dried precursor was placed in a high-temperature furnace and sintered at 1200°C for 3 hours in a nitrogen atmosphere, and naturally cooled, crushed and screened to obtain a SiOx composite material with gradient doped of Zn;
(4) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Zn doped in a concentration-gradient manner;
(5) the prepared SiOx composite material, carbon black (SP) and sodium carboxymethyl cellulose (CMC) were mixed according to the ratio of 7: 2: 1 to prepare negative electrode slurry, a negative electrode sheet was prepared after coating and drying, a ternary positive electrode material, Lithium nickel cobalt manganate NCM 811, was used as a counter electrode, a button cell was assembled in a glove box, and a charge-discharge test was conducted; and battery test results are listed in Table 1.

### Embodiment 3

The embodiment provides a negative electrode material with gradient-doped of Zn.

The preparation process and testing process are as follows.
(1) A zinc acetate solution of 1 mol/L, a sodium hydroxide solution of 2 mol/L and ammonia water of 2 mol/L were prepared first;
(2) SiOx particles and deionized water were fully stirred and evenly mixed according to the ratio of 1:10 to prepare SiOx slurry, then the zinc acetate solution was added while stirring, where the mass ratio of the introduced zinc element to the SiOx was 1:5, after even mixing, the sodium hydroxide solution and the ammonia water were added into a reaction container together, the pH was adjusted to 11, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1200°C for 3 hours in a nitrogen atmosphere, and naturally cooled, crushed and screened to obtain a SiOx composite material with gradient doped of Zn;
(5) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Zn doped in a concentration-gradient manner;
(6) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, a positive electrode material, Lithium cobaltate LCO, was used as a counter electrode, a button cell was assembled in a glove box, and a charge-discharge test was conducted; and battery test results are listed in Table 1.

### Embodiment 4

The embodiment provides a negative electrode material with gradient doped Ni.

The preparation process and testing process are as follows.
(1) A nickel chloride solution of 1 mol/L, a sodium hydroxide solution of 2 mol/L and ammonia water of 2 mol/L were prepared first;
(2) SiOx particles and deionized water were fully stirred and evenly mixed according to the ratio of 1: 10 to prepare SiOx slurry, then the nickel chloride solution was added while stirring, where the mass ratio of the introduced nickel element to the SiOx was 1: 3, after even mixing, the sodium hydroxide solution and the ammonia water were added into a reaction container together, the pH was adjusted to 11, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1200°C for 3 hours in a nitrogen atmosphere, and naturally cooled, crushed and screened to obtain a SiOx composite material with gradient doped Ni;
(5) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Ni doped in a concentration-gradient manner;
(6) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, by using a ternary positive electrode material, NCM 333, a button cell was assembled in a glove box, and a charge-discharge test was conducted; and battery test results are listed in Table 1.

### Embodiment 5

The embodiment provides a negative electrode material with gradient doped Ni.

The preparation process and testing process are as follows.
(1) A nickel nitrate solution of 1 mol/L, a sodium hydroxide solution of 2 mol/L and ammonia water of 2 mol/L were prepared first;
(2) SiOx particles and deionized water were fully stirred and evenly mixed according to the ratio of 1:10 to prepare SiOx slurry, then the nickel nitrate solution was added while stirring, where the mass ratio of the introduced nickel element to the SiOx was 1:4, after even mixing, the sodium hydroxide solution and the ammonia water were added into a reaction container together, the pH was adjusted to 11, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1200°C for 3 hours in a nitrogen atmosphere, and naturally cooled, crushed and screened to obtain a SiOx composite material with gradient doped Ni;
(5) the screened sample was evenly mixed with petroleum asphalt according to the mass ratio of 20: 1, and the mixture was placed in a high-temperature furnace to be subjected to heat treatment at 900°C in a nitrogen atmosphere for 2 hours to obtain a carbon-coated SiOx composite negative electrode with Ni doped in a concentration-gradient manner;
(6) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, by using a ternary positive electrode material, NCM 523, a button cell was assembled in a glove box, and a charge-discharge test was conducted; and battery test results are listed in Table 1.

### Embodiment 6

The embodiment provides a negative electrode material with gradient doped Ni.

The preparation process and testing process are as follows.
(1) A diethyl ether solution of nickelocene of 1 mol/L was prepared first;
(2) SiOx particles and diethyl ether were fully stirred and evenly mixed according to the ratio of 1:10 to prepare SiOx slurry, then the diethyl ether solution of nickelocene was added while stirring, where the mass ratio of the introduced nickel element to the SiOx was 1:5, continuous stirring was conducted for 10 hours, and then the slurry was placed in an oven in 80°Cto be baked for 12 hours;
(3) a dried precursor was put into a high-temperature furnace, sintered at 1200°C for 3 hours in a nitrogen atmosphere, and naturally cooled, crushed and screened to obtain a SiOx composite material with gradient doped Ni;
(4) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Ni doped in a concentration-gradient manner;
(5) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, a ternary positive electrode material, Lithium nickel cobalt aluminate NCA, was used as a counter electrode, a button cell was assembled in a glove box, and a charge-discharge test was conducted; and battery test results are listed in Table 1.

### Embodiment 7

The embodiment provides a negative electrode material with gradient doped Al.

The preparation process and testing process are as follows.
(1) A Al₂(SO₄)₃ solution of 1 mol/L and ammonia water of 1 mol/L were prepared first;
(2) SiOx particles and deionized water were fully stirred and evenly mixed according to the ratio of 1: 10 to prepare SiOx slurry, then the Al₂(SO₄)₃ solution was added while stirring, where the mass ratio of the introduced Al element to the SiOx was 1:3, after even mixing, the ammonia water was added into a reaction container together, the pH was adjusted to 8, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1200°C for 3 hours in a nitrogen atmosphere, and naturally cooled, crushed and screened to obtain a SiOx composite material with gradient doped Al;
(5) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Al doped in a concentration-gradient manner;
(6) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, a positive electrode material, ferrous lithium phosphate (LFP), was used as a counter electrode, a button cell was assembled in a glove box, and a charge-discharge test was conducted; and battery test results are listed in Table 1.

### Embodiment 8

The embodiment provides a negative electrode material with gradient doped Na.

The preparation process and testing process are as follows.
(1) A Na₃C₆H₅0₇·2H₂O solution of 1 mol/L was prepared first;
(2) SiOx particles and deionized water were fully stirred and evenly mixed according to the ratio of 1:10 to prepare SiOx slurry, then the Na₃C₆H₅0₇·2H₂O solution was added while stirring, where the mass ratio of the introduced Na element to the SiOx was 1:4, continuous stirring was conducted for 10 hours, and then the mixture was placed in an oven at 80°C to be baked for 12 hours;
(3) a dried precursor was placed in a high-temperature furnace and sintered at 1200°C for 3 hours in a nitrogen atmosphere, and naturally cooled, crushed and screened to obtain a SiOx composite material with gradient doped Na;
(4) the screened sample was evenly mixed with glucose according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Na doped in a concentration-gradient manner;
(5) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, a positive electrode material, lithium manganese oxide (LMO), was used as a counter electrode, a button cell was assembled in a glove box, and a charge-discharge test was conducted; and battery test results are listed in Table 1.

### Embodiment 9

The embodiment provides a negative electrode material with gradient doped Al.

The preparation process and testing process are as follows.
(1) An ethyl alcohol solution of aluminium isopropoxide of 1 mol/L was prepared first;
(2) SiOx particles and ethyl alcohol were fully stirred and evenly mixed according to the ratio of 1: 10 to prepare SiOx slurry, then the ethyl alcohol solution of aluminium isopropoxide was added while stirring, where the mass ratio of the introduced Al element to the SiOx was 1:5, continuous stirring was conducted for 10 hours, and then the slurry was placed in an oven at 80°C to be baked for 12 hours;
(3) a dried precursor was put into a high-temperature furnace, sintered at 1200°C for 3 hours in a nitrogen atmosphere, and naturally cooled, crushed and screened to obtain a SiOx composite material with gradient doped Al;
(4) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Al doped in a concentration-gradient manner;
(5) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, metal Li was used as a counter electrode, a button cell was assembled in a glove box, and a charge-discharge test was conducted; and battery test results are listed in Table 1.

### Embodiment 10

The embodiment provides a negative electrode material with gradient doped Mg.

The preparation process and testing process are as follows.
(1) A magnesium acetate solution of 1 mol/L, a sodium hydroxide solution of 2 mol/L and ammonia water of 2 mol/L were prepared first;
(2) SiOx particles and deionized water were fully stirred and evenly mixed according to the ratio of 1: 10 to prepare SiOx slurry, then the magnesium acetate solution was added while stirring, where the mass ratio of the introduced magnesium element to the SiOx was 1: 3, after even mixing, the sodium hydroxide solution and the ammonia water were added into a reaction container together, the pH was adjusted to 11, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put in vacuum, sintered at 1200°C for 3 hours in vacuum, and naturally cooled, crushed and screened to obtain a SiOx composite material with gradient doped Mg;
(5) a screened sample was placed in a rotary furnace, a mixed gas of argon and acetylene with a volume ratio of 3:1 was introduced at 900°C, and the temperature was kept for 2 hours to obtain a carbon-coated SiOx composite negative electrode with Mg doped in a concentration-gradient manner;
(6) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, by using a ternary positive electrode material, NCM 811, a button cell was assembled in a glove box, and a charge-discharge test was conducted; and battery test results are listed in Table 1.

### Embodiment 11

The embodiment provides a negative electrode material with gradient-doped Fe.

The preparation process and testing process are as follows.
(1) An iron acetate solution of 1 mol/L, a sodium hydroxide solution of 2 mol/L and ammonia water of 2 mol/L were prepared first;
(2) SiOx particles and deionized water were fully stirred and evenly mixed according to the ratio of 1:10 to prepare SiOx slurry, then the iron acetate solution was added while stirring, where the mass ratio of the introduced Fe to the SiOx was 1:3, after even mixing, the sodium hydroxide solution and the ammonia water were added into a reaction container together, the pH was adjusted to 11, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put in a vacuum furnace, sintered at 1000°C for 3 hours in vacuum, and naturally cooled, crushed and screened to obtain a SiOx composite material with gradient doped Fe;
(5) a screened sample was placed in a rotary furnace, a mixed gas of argon and methane with a volume ratio of 3:1 was introduced at 1000°C, and the temperature was kept for 2 hours to obtain a carbon-coated SiOx composite negative electrode with Fe doped in a concentration-gradient manner;
(6) the prepared SiOx composite material, carbon black (SP) and sodium carboxymethyl cellulose (CMC) were mixed according to the ratio of 7: 2: 1 to prepare negative electrode slurry, a negative electrode sheet was prepared after coating and drying, metal Li was used as a counter electrode, a garnet type Li₇La₃Zr₂O₁₂ (LLZO) was used as a solid electrolyte, an all-solid button cell was assembled in a glove box, and a charge-discharge test was conducted; and battery test results are listed in Table 1.

### Embodiment 12

The embodiment provides a negative electrode material with gradient-doped Co.

The preparation process and testing process are as follows.
(1) A cobalt acetate solution of 1 mol/L, a sodium hydroxide solution of 2 mol/L and ammonia water of 2 mol/L were prepared first;
(2) SiOx particles and deionized water were fully stirred and evenly mixed according to the ratio of 1:10 to prepare SiOx slurry, then the cobalt acetate solution was added while stirring, where the mass ratio of the introduced cobalt to the SiOx was 1:3, after even mixing, the sodium hydroxide solution and the ammonia water were added into a reaction container together, the pH was adjusted to 11, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1000°C for 3 hours in an argon atmosphere, and naturally cooled, crushed and screened to obtain a SiOx composite material with gradient doped Co;
(5) a screened sample was placed in a rotary furnace, a mixed gas of argon and methane with a volume ratio of 3:1 was introduced at 1000°C, and the temperature was kept for 2 hours to obtain a carbon-coated SiOx composite negative electrode with Co doped in a concentration-gradient manner;
(6) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, metal Li was used as a counter electrode, a polyolefin-based gel polymer electrolyte membrane was used as a semi-solid electrolyte, a semi-solid button cell was assembled in a glove box, and a charge-discharge test was conducted; and battery test results are listed in Table 1.

### Embodiment 13

The embodiment provides a negative electrode material featuring gradient doping Co.

The preparation process and testing process are as follows.
(1) A cobalt nitrate solution of 1 mol/L, a sodium hydroxide solution of 2 mol/L and ammonia water of 2 mol/L were prepared first;
(2) SiOx particles and deionized water were fully stirred and evenly mixed according to the ratio of 1:10 to prepare SiOx slurry, then the cobalt nitrate solution was added while stirring, where the mass ratio of the introduced cobalt to the SiOx was 1:3, after even mixing, the sodium hydroxide solution and the ammonia water were added into a reaction container together, the pH was adjusted to 11, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1000°C for 3 hours in an argon atmosphere, and naturally cooled, crushed and screened to obtain a SiOx composite material with gradient doped Co;
(5) a screened sample was placed in a rotary furnace, a mixed gas of argon and methane with a volume ratio of 3:1 was introduced at 1000°C, and the temperature was kept for 2 hours to obtain a carbon-coated SiOx composite negative electrode with Co doped in a concentration-gradient manner;
(6) the prepared SiOx composite material and commercial graphite were compounded into a 450 mAh/g composite material, the positive electrode material, Lithium cobaltate (LCO), was used as a counter electrode, a button cell was assembled in a glove box, and a charge-discharge test was conducted; and battery test results are listed in Table 1.

### Embodiment 14

The embodiment provides a negative electrode material with gradient doped Li.

The preparation process and testing process are as follows.
(1) a lithium carbonate solution of 1 mol/L was prepared first, and the pH was adjusted to 3 with dilute hydrochloric acid;
(2) SiOx particles and deionized water were fully stirred and evenly mixed according to the ratio of 1: 10 to prepare SiOx slurry, then the lithium carbonate solution was added while stirring, where the mass ratio of the introduced Li element to the SiOx was 1: 5, continuous stirring was conducted for 10 hours, and then the mixture was placed in an oven at 80°C to be baked for 12 hours;
(3) a dried precursor was placed in a high-temperature furnace and sintered at 1200°C for 3 hours in a nitrogen atmosphere, and naturally cooled, crushed and screened to obtain a SiOx composite material with gradient doped Li;
(4) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Li doped in a concentration-gradient manner;
(5) the prepared SiOx composite material and commercial graphite were compounded into a 550 mAh/g composite material, metal Li was used as a counter electrode, a button cell was assembled in a glove box, and a charge-discharge test was conducted; and battery test results are listed in Table 1.

### Embodiment 15

The embodiment provides a negative electrode material with gradient doped Cu.

The preparation process and testing process are as follows.
(1) A CuSO₄ solution of 1 mol/L and ammonia water of 1 mol/L were prepared first;
(2) SiOx particles and deionized water were fully stirred and evenly mixed according to the ratio of 1:10 to prepare SiOx slurry, then the CuSO₄ solution was added while stirring, where the mass ratio of the introduced Cu element to the SiOx was 1:5, after even mixing, the ammonia water was added into a reaction container together, the pH was adjusted to 8, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1200°C for 3 hours in a nitrogen atmosphere, and naturally cooled, crushed and screened to obtain a SiOx composite material with gradient doped Cu;
(5) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Cu doped in a concentration-gradient manner;
(6) the prepared SiOx composite material and commercial graphite were compounded into a 550 mAh/g composite material, metal Li was used as a counter electrode, a button cell was assembled in a glove box, and a charge-discharge test was conducted; and battery test results are listed in Table 1.

### Embodiment 16

The embodiment provides a negative electrode material with gradient doped Mn.

The preparation process and testing process are as follows.
(1) A Mn (CH₃COO)₂ solution of 1 mol/L and ammonia water of 1 mol/L were prepared first;
(2) SiOx particles and deionized water were fully stirred and evenly mixed according to the ratio of 1:10 to prepare SiOx slurry, then the Mn (CH₃COO)₂ solution was added while stirring, where the mass ratio of the introduced Mn element to the SiOx was 1:5, after even mixing, the ammonia water was added into a reaction container together, the pH was adjusted to 8, and continuous stirring was conducted for 10 hours, where the reaction temperature in the whole process was 60°C;
(3) the precipitated slurry was washed and centrifuged many times, and dried in an oven at 80°C for 12 hours;
(4) a dried precursor was put into a high-temperature furnace, sintered at 1200°C for 3 hours in a nitrogen atmosphere, and naturally cooled, crushed and screened to obtain a SiOx composite material with gradient doped Mn;
(5) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with Mn doped in a concentration-gradient manner;
(6) the prepared SiOx composite material and commercial graphite were compounded into a 550 mAh/g composite material, metal Li was used as a counter electrode, a button cell was assembled in a glove box, and a charge-discharge test was conducted; and battery test results are listed in Table 1.

### Comparative example 1

The comparative example provides a negative electrode material featuring uniform doping of Zn.

The preparation process and testing process are as follows.
(1) metal Zn and SiOx were evenly mixed according to the ratio of 1:3, and put in a crucible of a vacuum reaction furnace; after vacuumizing to 10 Pa, the temperature was gradually raised to 1200°C and kept for 3 hours; in the vacuum environment, the metal Zn and SiOx volatilized successively into zinc vapor and SiOx vapor, and the two kinds of vapor met and deposited on a cooling plate in the vacuum reaction furnace; and a discharged material was crushed and screened to obtain a SiOx composite material featuring uniform doping of Zn;
(2) the screened sample was evenly mixed with petroleum asphalt according to the mass ratio of 20:1, and the mixture was placed in a high-temperature furnace to be subjected to heat treatment at 900°C in a nitrogen atmosphere for 2 hours to obtain a carbon-coated SiOx composite negative electrode with uniform doped Zn; and
(3) the prepared SiOx composite material, carbon black (SP) and sodium carboxymethyl cellulose (CMC) were mixed according to the ratio of 7:2:1 to prepare negative electrode slurry, a negative electrode sheet was prepared after coating and drying, metal Li was used as a counter electrode, a button cell was assembled in a glove box, and a charge-discharge test was conducted; and battery test results are listed in Table 1.

**Table 1**

| No. | First-cycle gram volume (mAh/g) | First-cycle efficiency | 50-cycle capacity retention rate |
|---|---|---|---|
| 1 | 1404 | 80.5% | 68% |
| 2 | 1350 | 81.7% | 72% |
| 3 | 1292 | 83.1% | 75% |
| 4 | 1390 | 79.3% | 68% |
| 5 | 1309 | 79.9% | 75% |
| 6 | 1277 | 81.5% | 76% |
| 7 | 1403 | 78.9% | 70% |
| 8 | 1364 | 81.4% | 72% |
| 9 | 1307 | 82.5% | 74% |
| 10 | 1398 | 80.7% | 69% |
| 11 | 1275 | 79.6% | 68% |
| 12 | 1306 | 80.3% | 70% |
| 13 | 451 | 90.7% | 87% |
| 14 | 549 | 89.2% | 82% |
| 15 | 552 | 88.3% | 81% |
| 16 | 551 | 87.5% | 81% |
| Comparative example 1 | 1387 | 80.9% | 58% |

As shown in Table 1, for particles with concentration-gradient doped in the above embodiments, with the increase of doping amount, the gram volume of SiOx decreases, but the first-cycle efficiency, especially the cycling performance is obviously improved. By comparing Embodiment 1 with Comparative Example 1, it can be seen that under the same total doping amount, there is little difference in the first-cycle gram volume and the first-cycle efficiency, but the material cycling performance (50-cycle capacity retention rate) of Embodiment 1 featuring concentration-gradient doping is obviously better. During lithium intercalation of SiOx, the whole particle expands. Besides its own expansion stress, an outer shell of the particle also bears the pressure caused by expansion inside the particle, so as to bear greater stress than an inner position. The high outside and low inside gradient doping method can better adapt to the increasing stress of the particle from inside to outside, and has an obvious effect on alleviating volume expansion, so as to improve the cycling performance.

The above-mentioned specific embodiments further explain the purpose, technical scheme and beneficial effects of the present invention in detail. It should be understood that the above are only specific embodiments of the present invention and are not used to limit the scope of protection of the present invention.

## Claims

1. A negative electrode material on which a metal element is gradient-doped, wherein the negative electrode material comprises a granular silicon oxide/M composite material on which a metal element M is gradient-doped;
the general formula of the silicon oxide is SiOx, wherein 0<x<2;
the metal element M comprises one or more of Na, Mg, Al, Li, Mn, Fe, Co, Ni, Cu or Zn; in the negative electrode material, the content of the metal element M gradually decreases from a surface to a core, showing a continuous doping distribution of concentration gradient; and
the general chemical formula of the silicon oxide /M composite material is SiM_{y}O_{z}, wherein 0<y<10, 0<z<10,
wherein a doping depth is controlled by diffusion of the metal element during high temperature solid state treatment depending on diffusion temperature, diffusion time, particle size and concentration gradient of the doping source, wherein a doping region of the metal element occupies [0-20%] to 100% of the particle radius of the negative electrode material from inside to outside, **characterized in that**
the average doping mass of the metal element M in the negative electrode material accounts for 5-40% of the total mass of the negative electrode material, and the content of the metal element M decreases continuously from 30-50% on the surface to 0-20% at the core in a gradient manner.

2. The negative electrode material on which a metal element is gradient-doped according to claim 1, wherein an average particle diameter (D₅₀) of the negative electrode material is 0.1µm - 40 µm, and a particle specific surface area of the negative electrode material is 1-40 m²/g.

3. The negative electrode material on which a metal element is gradient-doped according to claim 1, wherein the negative electrode material further comprises a carbonaceous coating layer coated on outer surfaces of the silicon oxide /M composite particles.

4. A negative electrode sheet, wherein the negative electrode plate comprises the negative electrode material according to any one of claims 1-3.

5. A lithium battery, wherein the lithium battery comprises the negative electrode material according to any one of claims 1-3.

6. The lithium battery according to claim 5, wherein the lithium battery is a liquid lithium ion battery, a semi-solid lithium ion battery, an all-solid ion battery or a lithium-sulfur battery.

## Patentansprüche

1. Negativelektrodenmaterial, auf das ein Metallelement gradientenartig dotiert ist, wobei das Negativelektrodenmaterial ein körniges Siliziumoxid/M-Verbundmaterial umfasst, auf das ein Metallelement M gradientenartig dotiert ist;
die allgemeine Formel des Siliziumoxids SiOx ist, wobei 0<x<2;
das Metallelement M eines oder mehrere der Elemente Na, Mg, Al, Li, Mn, Fe, Co, Ni, Cu oder Zn umfasst; in dem Negativelektrodenmaterial der Gehalt des Metallelements M von der Oberfläche zum Kern hin allmählich abnimmt und eine kontinuierliche Dotierungsverteilung mit Konzentrationsgradienten aufweist; und
die allgemeine chemische Formel des Siliziumoxid/M-Verbundmaterials SiM_{y}O_{z} ist, wobei 0<y<10, 0<z<10,
wobei die Dotierungstiefe durch die Diffusion des Metallelements während einer Hochtemperatur-Festkörperbehandlung in Abhängigkeit von Diffusionstemperatur, Diffusionszeit, Partikelgröße und Konzentrationsgradienten der Dotierungsquelle gesteuert wird, wobei ein Dotierungsbereich des Metallelements [0-20%] bis 100 % des Partikelradius des Negativelektrodenmaterials von innen nach außen einnimmt, **dadurch gekennzeichnet, dass**
die durchschnittliche Dotiermasse des Metallelements M in dem Negativelektrodenmaterial 5-40% der Gesamtmasse des Negativelektrodenmaterials ausmacht und der Gehalt des Metallelements M gradientenartig von 30-50% an der Oberfläche auf 0-20% im Kern kontinuierlich abnimmt.

2. Negativelektrodenmaterial, auf das ein Metallelement gradientenartig dotiert ist, gemäß Anspruch 1, wobei ein durchschnittlicher Partikeldurchmesser (D₅₀) des Negativelektrodenmaterials 0,1µm - 40 µm beträgt und eine spezifische Partikeloberfläche des Negativelektrodenmaterials 1-40 m²/g beträgt.

3. Negativelektrodenmaterial, auf das ein Metallelement gradientenartig dotiert ist, gemäß Anspruch 1, wobei das Negativelektrodenmaterial ferner eine kohlenstoffhaltige Beschichtungslage umfasst, die auf die Außenflächen der Siliziumoxid/M-Verbundmaterial-Partikel aufgebracht ist.

4. Negativelektrodenplatte, wobei die Negativelektrodenplatte das Negativelektrodenmaterial gemäß einem der Ansprüche 1 bis 3 umfasst.

5. Lithiumbatterie, wobei die Lithiumbatterie das Negativelektrodenmaterial gemäß einem der Ansprüche 1 bis 3 umfasst.

6. Lithiumbatterie nach Anspruch 5, wobei die Lithiumbatterie eine flüssige Lithium-Ionen-Batterie, eine halbfeste Lithium-Ionen-Batterie, eine Feststoff-Ionen-Batterie oder eine Lithium-Schwefel-Batterie ist.

## Revendications

1. Matériau d'électrode négative sur lequel un élément métallique est dopé par gradient, dans lequel le matériau d'électrode négative comprend un matériau composite granulaire d'oxyde de silicium/M sur lequel un élément métallique M est dopé par gradient;
la formule générale de l'oxyde de silicium est SiOx, où 0 < x < 2;
l'élément métallique M comprend un ou plusieurs des éléments suivants: Na, Mg, Al, Li, Mn, Fe, Co, Ni, Cu ou Zn; dans le matériau d'électrode négative, la teneur en élément métallique M diminue graduellement de la surface vers le cœur, présentant une distribution de dopage continue avec un gradient de concentration; et
la formule chimique générale du matériau composite à base d'oxyde de silicium/M est SiM_{y}O_{z}, dans lequel 0 < y < 10, 0 < z < 10,
la profondeur de dopage étant contrôlée par la diffusion de l'élément métallique lors d'un traitement à l'état solide à haute température en fonction de la température de diffusion, du temps de diffusion, de la taille des particules et du gradient de concentration de la source de dopage, dans lequel une région de dopage de l'élément métallique occupe [0-20 %] à 100 % du rayon des particules du matériau d'électrode négative de l'intérieur vers l'extérieur, **caractérisé en ce que** la masse moyenne de dopage de l'élément métallique M dans le matériau d'électrode négative représente 5 à 40 % de la masse totale du matériau d'électrode négative, et la teneur en élément métallique M diminue de manière continue de 30 à 50 % en surface à 0 à 20 % au cœur de manière du gradient.

2. Matériau d'électrode négative sur lequel un élément métallique est dopé par gradient selon la revendication 1, dans lequel le diamètre moyen de particule (D₅₀) du matériau d'électrode négative est compris entre 0,1 µm et 40 µm, et la surface spécifique des particules du matériau d'électrode négative est comprise entre 1 et 40 m²/g.

3. Matériau d'électrode négative sur lequel un élément métallique est dopé par gradient selon la revendication 1, dans lequel le matériau d'électrode négative comprend en outre une couche de revêtement carbonée revêtue sur les surfaces externes des particules composites d'oxyde de silicium/M.

4. Feuille d'électrode négative, dans laquelle la plaque d'électrode négative comprend le matériau d'électrode négative selon l'une quelconque des revendications 1 à 3.

5. Batterie au lithium, dans laquelle la batterie au lithium comprend le matériau d'électrode négative selon l'une quelconque des revendications 1 à 3.

6. La batterie au lithium selon la revendication 5, dans laquelle la batterie au lithium est une batterie lithium-ion liquide, une batterie lithium-ion semi-solide, une batterie lithium-ion tout solide ou une batterie lithium-soufre.
